Europäisches Patentamt

European Patent Office

Office européen des brevets

(19)

(11) Veröffentlichungsnummer: **0 191 155**
**B1**

(12) **EUROPÄISCHE PATENTSCHRIFT**

(45) Veröffentlichungstag der Patentschrift: **18.07.90**

(51) Int. Cl.⁵: **G 08 B 13/18**

(21) Anmeldenummer: **85114807.2**

(22) Anmeldetag: **21.11.85**

(54) **Infrarot-Einbruchdetektor.**

(30) Priorität: **24.01.85 CH 306/85**

(43) Veröffentlichungstag der Anmeldung:
**20.08.86 Patentblatt 86/34**

(45) Bekanntmachung des Hinweises auf die
Patenterteilung:
**18.07.90 Patentblatt 90/29**

(84) Benannte Vertragsstaaten:
**AT BE CH DE FR GB IT LI NL SE**

(56) Entgegenhaltungen:
**EP-A-0 065 159**
**US-A-4 271 360**

(73) Patentinhaber: **CERBERUS AG**
**Alte Landstrasse 411**
**CH-8708 Männedorf (CH)**

(72) Erfinder: **Müller, Kurt**
**Tödihof 4**
**CH-8712 Stäfa (CH)**
Erfinder: **Gruber, Peter**
**Tränkebachstrasse 22**
**CH-8712 Stäfa (CH)**
Erfinder: **Wüthrich, Alfred**
**Laubstenstrasse 18e**
**CH-8712 Stäfa (CH)**

(74) Vertreter: **Tiemann, Ulrich, Dr.-Ing. et al**
**c/o Cerberus AG Patentabteilung Alte**
**Landstrasse 411**
**CH-8708 Männedorf (CH)**

Courier Press, Leamington Spa, England.

## Beschreibung

Die Erfindung betrifft einen Infrarot-Einbruchdetektor mit einem Infrarot-Sensor nach dem Oberbegriff des Anspruchs 1.

Ein solcher Einbruchdetektor ist beispielsweise aus der EP—A—0 025 188, Figur 5, vorbekannt. Durch die Faltung des Strahlenganges lässt sich dabei die Bauteife des Detektors ein Einstrahlungsrichtung gegenüber Konstruktionen ohne gefalteten Strahlengang etwa auf die Hälfte reduzieren, und es wird ein relativ flache Konstruktion des Detektors erreicht. Nachteilig ist, dass mit der offenbarten Anordnung mehrerer Primär-Reflektoren in einer horizontalen Reihe sich auch nur eine Gruppe von horizontal nebeneinander liegenden Strahlungs-Empfangsbereichen erzeugen lässt. Damit lässt sich ein zu überwachender Raum jedoch nur unvollkommen mit Empfangsbereichen überedecken, so dass es für einen Eindringling immer noch möglich ist, sich im überwachten Raum ohne Durchschreiten der Empfangsbereiche und daher unentdeckt zu bewegen. Der Schutz durch einen solchen Detektor ist daher noch unvollkommen und verbesserungsbedürftig.

Aus der US—A—3 703 718 ist bereits ein Einbruchdetektor bekannt, bei dem, wie insbesondere in Fig. 9—11 gezeigt, mehrere Horizontale Reihen von Reflektoren vorgesehen sind, die mehrere Gruppen von Empfangsbereichen mit unterschiedlicher Neigung gegen die Horizontal-Ebene bilden. Da kein gefalteter Strahlengang vorgesehen ist, muss dabei jedoch der Sensor in einem Abstand von den Reflektoren angebracht werden, der der Brennweite der Reflektoren entspricht. Die grössten, in einem Einbruchdetektor mittlerer Reichweite vorkommenden Brennweiten liegen in der Regel zwischen 6 und 10 cm. Die Bautiefe und die Abmessungen der Detektors sind daher erheblich und verunmöglichen eine unauffällige Anbringung eines solchen Detektors. Weiter ist nachteilig, dass die Brennweiten der verschiedenen Reihen von Reflektoren nahezu gleich gewählt sind, um alle Reflektoren etwa am gleichen Ort und auf einem gemeinsamen Träger anordnen zu können. Da die Empfangsbereich verschiedener Neigung gegen die Horizontal-Ebene aber einen Eindringling in verschiedener Distanz vom Detektor erfassen, hat diese gleiche Brennweite von Reflektoren aus verschiedenen horizontalen Reihen jedoch zur Folge, dass ein Eindringling in den entsprechenden Empfangsbereich von den Reflektoren verschieden gross auf den Sensor abgebildet wird. Eine Abstimmung von Sensorfläche und Körperfläche eines Eindringlings in verschiedener Distanz vom Detektor ist nicht vorgesehen, so dass die Empfindlichkeit des Detektors in Empfangsbereichen verschiedener Neigung unterschiedlich ist.

Dieser Nachteil lässt sich gemäss US—A—4 339 748 zwar dadurch vermeiden, dass die Brennweite der Reflektoren verschiedener horizontaler Reihen unterschiedlich gewählt wird. Um eine saubere Abbildung eines Eindringlings auf den gemeinsamen Sensor zu erreichen, müssen dabei jedoch die zu Empfangsbereichen verschiedener Neigung gehörenden Reflektor-Reihen in entsprechend verschiedenen Abständen vom gemeinsamen Sensor angeordnet sein. Da sich also die einzelnen Reflektor-Reihen an verschiedenen Orten befinden müssen, bedingt dies eine komplizierte Konstruktion der Optik.

Die vorstehende genannten Einbruckdetektoren weisen noch den weiteren Nachteil auf, dass die Flächen der Reflektoren einer horizontalen Reihe nahezu gleich oder nicht sehr unterschiedlich sind, oder dass deren Fläche, wie in Figur 9 der US—A—3 703 718 gezeigt, bei den seitlichen Reflektoren sogar deutlich kleiner ist als bei den mittleren Reflektoren. Aus den zugehörigen, schräg oder geneigt zur vertikalen Symmetrie-Ebene des Detektors verlaufenden Empfangsbereichen wird daher eine geringere Strahlungsmenge auf die Sensorfläche geleitet als aus den mittleren Empfangsbereichen, einerseits bedingt durch die kleinere Reflektorfläche, andererseits zusätzlich verursacht durch die kleinere scheinbare Fläche der Sensorelemente für schräg einfallende Strahlung. Die Empfindlichkeit in den seitlichen Empfangsbereichen ist daher bei vorbekannten Einbruchdetektoren deutlich geringer als in den mittleren Empfangsbereichen.

Die Erfindung setzt sich die Aufgabe, die erwähnten Nachteile des Standes der Technik zu beseitigen und insbesondere einen Infrarot-Einbruchdetektor zu schaffen, der eine besonderes flache Konstruktion aufweist, einfach und kompakt aufgebaut ist, und in Empfangsbereichen unterschiedlicher Neigung gegen die Horizontal-Ebene sowie in Empfangsbereichen verschiedener Neigung gegen die vertikale Symmetrie-Ebene des Detektors eine weitgehend gleiche Empfindlichkeit und somit auch eine gleichförmige Nachweisempfindlichkeit eines Eindringlings im gesamten überwachten Raum aufweist.

Erfindungsgemäss wird diese Aufgabe durch die Merkmale des Anspruchs 1 gelöst.

In der US—A—4 271 360 ist ein passiver Infrarot-Einbruchdetektor für die Montage an der Decke eines zu überwachenden Raums beschrieben. Zur Erzielung eines möglichst großen Erfassungswinkels in horizontaler und vertikaler Richtung dient ein vielflächiger Spiegel, dessen Facetten zur Erfassung von IR-Strahlung aus einem Winkel von 360° ringförmig in mehreren Reihen übereinander angeordnet sind. Dieser Primärspiegel ist so konstruiert, daß er die aus einer Vielzahl von überwachten Zonen auftreffenden Strahlen in Form eines (einzigen) Bündels paralleler Strahlen reflektiert. Dieses Bündel paralleler Strahlen wird durch einen einzigen Sekundärespiegel auf den im Zentrum des Primärspiegels angeordneten Infrarotdetektor fokussiert.

In einem Infrarot-Eindringdetektor nach dem Oberbegriff des Anspruchs 1 könnten an sich Primär- und Sekundär-Reflektoren beide eine gekrümmte Oberfläche aufweisen. Nach der Erfindung ist aber einer der beiden, einander paarweise zugeordneten Reflektoren eben zu gestalten, um zu einer einfachen Konstruktion des Einbruchdetektors zu gelangen.

In der EP—A—0 065 159 ist ein Infrarot-Eindringdetektor beschreiben, welcher mehrere ebene Reflektoren aufweist.

Vorteilhalfe weiterbildungen der Erfindung sind in den Unteransprüchen angegeben.

Die Erfindung wird an Hand eines in den Figuren dargestellten Ausführungsbeispiels näher erläutert.

Figure 1 zeigt einen Infrarot-Einbruchdetektor im Schnitt entlang der vertikalen Symmetrie-Ebene S—S,

Figur 2 zeigt einen Vertikalschnitt des Detektors nach der Ebene V—V von Figur 1.

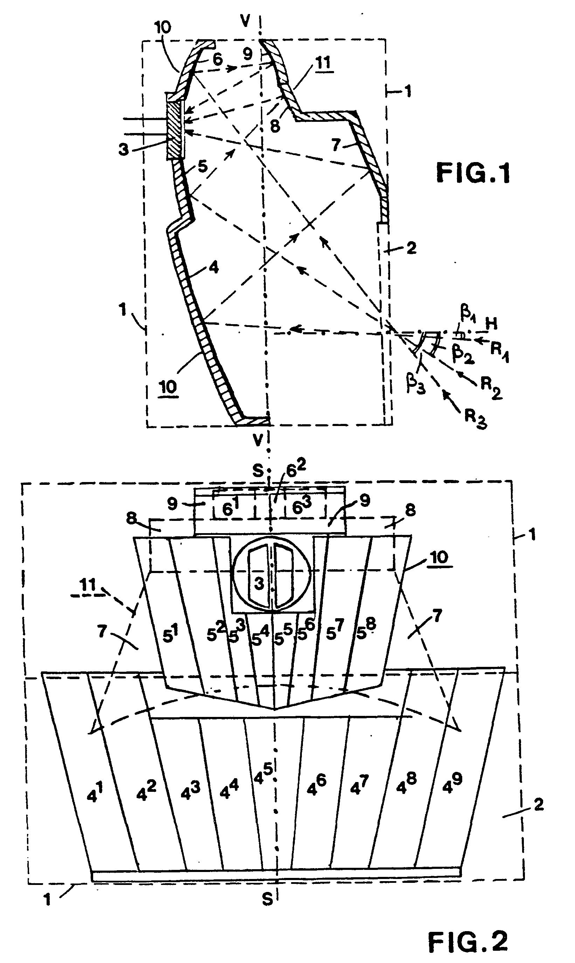

Bei dem in den Figuren 1 und 2 in verschiedenen Vertikalschnitten dargestellten Einbruchdetektor ist in einem schematische angedeuteten Gehäuse 1 mit einem Strahlungs-Eintrittsfenster 2 eine Vielzahl von Reflektoren angeordnet sowie ein Infrarot-Sensor 3, der in bekannter Weise als Single-Element- oder als Dual-Sensor ausgebildet sein kann. Die Reflektoren bilden drei Reihen 4, 5 und 6 von horizontal nebeneinander angeordneten Primär-Reflektoren $4^1$—$4^9$, $5^1$—$5^8$ und $6^1$—$6^3$. Jeder der Reihen 4—6 von Primär-Reflektoren ist jeweils ein gemeinsamer Sekundär-Reflektor 7, 8 und 9 zugeordnet. Dabei sind die einzelnen Reflektoren so angeordnet, dass die Primär-Reflektoren 4 mit dem Sekundär-Reflektor 7 eine Strahlungs-Empfangsbereichsgruppe $R_1$, die Primär-Reflektoren 5 mit dem Sekundär-Reflektor 8 eine Empfangsbereichgruppe $R_2$ und die Primär-Reflektoren 6 mit dem Sekundär-Reflektor 9 eine Empfangsbereichsgruppe $R_3$ bilden, wobei die drei derart erzeugten Empfangsbereichsgruppen $R_1$, $R_2$ und $R_3$ einen unterschiedlichen Neigungswinkel $\beta_1$, $\beta_2$ und $\beta_3$ gegen die Horizontalebene H aufweisen. Diesen verschiedenen Neigungen der Empfangsbereichsgruppen entsprechen unterschiedliche Nachweise-Distanzen eines Eindringlings in einen geschützten Raum, wenn der Einbruchdetektor beispielsweise in einer bestimmten Höhe an einer Wand des überwachten Raumes angebracht ist. Bei einer typischen Anordnung können z.B. Neigungswinkel von $\beta_1$=6°, $\beta_2$=16° und $\beta_3$=40° vorgesehen sein.

Um einen Eindringling in einem der Empfangsbereich unterschiedlicher Neigung in verschiedener Distanz etwa in der gleichen Grösse auf die Empfangsflächs des Sensors 3 abzubilden und somit unabhängig von der Entfernung etwa mit gleicher Empfindlichkeit nachweisen zu können, sind die Krümmungen der Primär- und Sekundär-Reflektoren so aufeinander abgestimmt, dass die resultierenden Brennweiten mit zunehmender Neigung des Empfangsbereiches kürzer werden. Bei dem Ausführungsbeispiel mit den vorstehende genannten Neigungswinkeln hat sich beispielsweise eine Staffelung der zugehörigen Brennweiten von $f_1$=70 mm, $f_2$=35 mm und $f_3$=16 mm als günstig erwiesen.

Um einen einfachen und kompakten konstruktiven Aufbau des Einbruchdetektors zu erreichen, sind die einzelnen Reflektoren zu zwei Bauteilen 10 und 11 zusammengefasst, die jeweils in einem Stück hergestellt werden können. Dabei ist jeweils einer der beiden einer Empfangsbereichsgruppe zugeordneten Reflektoren in dem einen Bauteil enthalten, und der andere Reflektor in dem im Abstand zum ersten Bauteil angeordneten anderen Bauteil. Im dargestellten Beispiel sind z.B. die Primär-Reflektoren 4 und 5 der Empfangsbereichsgruppen $R_1$ und $R_2$ mit flacher Neigung und grosser Reichweite als gekrümmte Flächen ausgebildet und unterhalb des Sensors 3 im Bauteil 10 zusammengefasst, während die zugehörigen ebenen Sekundär-Reflektoren 7 und 8 im anderen Bauteil 11 liegen. Für die Nahempfangsbereichsgruppe $R_3$ mit grosser Neigung sind, bedingt durch den engen zur Verfüngung stehenden Raum, die Primär-Reflektoren 6 ebene Flächen und liegen oberhalb des Sensors 3 im Bauteil 10, während der Sekundärspiegel 9 eine gekrümmte Fläche ist und in den anderen Bauteil 11 zu liegen kommt. Die Krümmungen der einzelnen gekrümmten Reflektoren lassen sich bei dieser Anordnung ohne besondere Schwierigkeiten so wählen, dass die einzelnen Reflektor-Gruppen in den beiden Bauteilen 10 und 11 wenigstens angenähert übereinander zu liegen kommen und die Bauteile auf einfache Weise in einem Stück herstellbar sind. Zweckmässig ist es, auch den Sensor 3 in eines der Bauteil 10 zu integrieren.

Auf die beschreibene Weise lässt sich ein Einbruchdetektor schaffen, der nicht nur besonders kompakt aufgebaut und einfache herstellbar und montierbar ist, sondern auch eine gleichförmige Empfindlichkeit in allen Empfangsbereichen unabhängig von deren Neigung und Reichweite aufweist und somit einen Eindringling in gesamten Raum unabhängig von der Entfernung vom Detektor gleich gut nachzuweisen gestattet.

Bei einer besonders vorteilhaften Weiterbildung kann auch noch der bei vorbekannten Einbruchdetektoren auftretende Empfindlichkeits-Abfall nach der Seite, als in Empfangsbereichen mit grosser Neigung gegen die vertikale Symmetrie-Ebene S des Detektors, vermieden werden. Dies kann dadurch erreicht werden, wie insbesondere aus dem in Figur 2 dargestellten Beispiel erkennbar ist, dass die Flächen der Primär-Reflektoren von der Mitte, also von der Symmetrie-Ebene S aus nach den Seiten zunehmen, entweder indem die Höhe oder indem die Breite der Reflektoren nach aussen zunimmt, oder beide Abmessungen gleichzeitig zunehmen. So steigt beispielsweise die wirksame Fläche der Primär-Reflektoren von der Mitte aus, d.h. von $4^5$, $5^4$ und $5^5$ sowie $6^2$ nach den Seiten, d.h. $4^1$ und $4^9$, $5^1$ und $5^8$ bzw. $6^1$ und $6^3$ sukzessive an. Umgekehrt können jedoch auch die gemeinsamen Sekundär-Reflektoren 7, 8 und 9 so gestaltet sein, dass deren Höhe in der Mitte am kleinsten ist und nach den Seiten zunimmt, wie insbesondere bei Reflektor 7 zu erkennen ist. Durch geeignete Bemessung der einzelnen Reflektoren unter Berücksichtigung des schrägen Strahlungseinfalles auf die Reflektoren und auf die Empfangsfläche des Sensors kann hiermit erreicht werden, dass aus den seitlichen Empfangsbereichen etwa die gleiche Strahlungsmenge vom Sensor aufgenommen wird, wie aus den mittleren Empfangsbereichen, und dass damit die Nachweis-Empfindlichkeit des Detektors weitgehend unabhängig von der Neigung des Strahlungseinfalles zur Symmetrie-Ebene des Detektors wird.

**Patentansprüche**

1. Infrarot-Eindringdetektor mit einem Infrarot-Sensor (3) und einer Vielzahl von Reflektoren (4—9) zur Fokussierung von Infrarot-Strahlung aus mindestens drei Strahlungsempfangsbereichen (R1—R3) auf den Infrarot-Sensor (3), wobei die Strahlung aus mehreren Empfangsbereichen über eine der zahl der Empfangsbereiche entsprechende Anzahl eine horizontale Reihe bildender Primär-Reflektoren ($4^1$—$4^9$, $5^1$—$5^8$, $6^1$—$6^3$) und einen gemeinsamen Sekundär-Reflektor (7—9) in einem gefalteten Strahlengang auf den Sensor (3) fokussiert wird, dadurch gekennzeichnet, daß mehrere Reihen (4—6) von Primär-Reflektoren und mehrere zugehörige Sekundär-Reflektoren (7—9) vorgesehen sind, die eine entsprechechende Anzahl von Gruppen von Strahlungsempfangsbereichen (R1—R3) mit gruppenweise unterschiedlicher Neigung ($\beta1$—$\beta3$) gegen die Horizontalebene (H) bilden, wobei jeweils einer der beiden jedem Empfangsbereich (R1—R3) zugeordneten Primär- bzw. Sekundär-Reflektoren (4—9) wenigstens angenähert in einer vertikalen Ebene und die anderen Reflektoren (4—9) in bestimmtem Abstand dazu angeordnet sind, wobei jeweils einer der Reflektoren (4—9) eben ausgebildet ist, während der zugehörige andere Reflektor (4—9) eine gekrümmte Oberfläche aufweist.

2. Infrarot-Eindringdetektor gemäß Patentanspruch 1, dadurch gekennzeichnet, daß die Primär-Reflektoren (4—6) zu einer ersten Baueinheit (10) zusammengefaßt sind.

3. Infrarot-Eindringdetektor gemäß Patentanspruch 1 oder 2, dadurch gekennzeichnet, daß Sekundär-Reflektoren (7—9) zu einer zweiten Baueinheit (11) zusammengefaßt sind.

4. Infrarot-Eindringdetektor gemäß Patentanspruch 3, dadurch gekennzeichnet, daß die Sekundär-Reflektoren (7—9) wenigstens angenähert in einer weiteren vertikalen Ebene angeordnet sind.

5. Infrarot-Eindringdetektor gemäß einem der Patentansprüche 2 bis 4, dadurch gekennzeichnet, daß der Sensor (3) in der ersten Baueinheit (10) integriert ist.

6. Infrarot-Eindringdetektor gemäß einem der Patentansprüche 1 bis 5, dadurch gekennzeichnet, daß für jede Empfangsbereichsgruppe einer der beiden zugeordneten Reflektoren, Primär- oder Sekundär-Reflektor, als eine einzige kontinuierliche Fläche ausgebildet ist und der andere aus einer Reihe von Reflektor-Segmenten besteht.

7. Infrarot-Eindringdetektor gemäß einem der Patentansprüche 1 bis 6, dadurch gekennzeichnet, daß für eine Gruppe (R3) von Strahlungsemp-fangsbereichen mit größerer Neigung ($\beta3$) gegen die Horizontalebene (H) die Primär-Reflektoren (61—63) als ebene Flächen und der zugehörige Sekundär-Reflektor als eine einzige kontinuierliche und gekrümmte Fläche ausgebildet sind.

8. Infrarot-Eindringdetektor gemäß einem der Patentansprüche 1 is 7, dadurch gekennzeichnet, daß die Primär-Reflektoren (4, 5) der Empfangsbereichsgruppen (R1, R2) geringerer Neigung ($\beta1$, $\beta2$) gegen die Horizontalebenen (H) unterhalb des Sensors (3) und die zugehörigen Sekundär-Reflektoren (7, 8) im Abstand davon angeordnet sind und daß die Primär-Reflektoren (6) der Emp-fangsbereichsgruppe (R3) größerer Neigung ($\beta3$) gegen die Horizontalebene (H) oberhalb des Sensors (3) und der zugehörige Sekundär-Reflektor (6) im Abstand davon angeordnet sind.

9. Infrarot-Eindringdetektor gemäß einem der Patentansprüche 1 bis 8, dadurch gekennzeichnet, daß die Brennweite der zu einer Strahlungsemp-fangsbereichsgruppe (R1—R3) gehörenden Pri-mär- bzw. Sekundär-Reflektor mit zunehmendem Neigungswinkel ($\beta1$—$\beta3$) der zugehörigen Emp-fangsbereichsgruppe (R1—R3) gegen die Horizontalebene (H) abnimmt.

10. Infrarot-Eindringdetektor gemäß einem der Patentansprüche 1 bis 9, dadurch gekennzeichnet, daß wenigstens bei einem Teil der Primär-Reflek-toren ($4^1$—$4^9$, $5^1$—$5^8$, $6^1$—$6^3$) die reflektierende Fläche, Höhe und/oder Breite von der Mitte, bzw. der Symmetrieebene (S) des Detektors (3) nach den Seiten hin zunimmt.

11. Infrarot-Eindringdetektor gemäß einem der Patentansprüche 1 bis 10, dadurch gekennzeichnet, daß wenigstens bei einem Teil der Sekundär-Reflektoren (7—9) die Höhe der reflektierenden Fläche von der Mitte, bzw. der Symmetrieebene (S) des Detektors (3) nach den Seiten hin zunimmt.

**Revendications**

1. Détecteur d'intrusion à infrarouge comportant un capteur à infrarouge (3) et une multiplicité de réflecteurs (4—9) servant à focaliser le rayonnement infrarouge à partir d'au moins trois zones (R1—R3) de réception du rayonnement, sur un capteur à infrarouge (3), le rayonnement provenant de plusieurs zones de réception étant focalisé sur le capteur (3) par l'intermédiaire d'un nombre, correspondant au nombre des zones de réception, de réflecteurs primaires ($4^1$—$4^9$, $5^1$—$5^8$, $6^1$—$6^3$) disposés suivant une rangée horizontale, et d'un réflecteur secondaire commun (7—9), avec un trajet replié du rayonnement, caractérisé par le fait qu'il est prévu plusieurs rangées (4—6) de réflecteurs primaires et plusieurs réflecteurs secondaires associés (7—9), qui forment un nombre correspondant de groupes de zones (R1—R3) de réception du rayonnement, avec des inclinai-sons ($\beta1$—$\beta3$) différentes par groupes, par rapport au plan horizontal (H), respectivement l'un des deux réflecteurs primaire ou secondaire (4—9) associés à chaque zone de réception (R1—R3) étant disposé au moins approximativement dans un plan vertical et les autres réflecteurs (4—6) étant disposés à une distance déterminée de ce plan, et respectivement l'un des réflecteurs (4—9) étant réalisé avec une forme plane, tandis que l'autre réflecteur associé (4—9) possède une surface cintrée.

2. Détecteur d'instrusion à infrarouge suivant la revendication 1, caractérisé par le fait que les réflecteurs primaires (4—6) sont rassemblés pour constituer une première unité de construction (10).

3. Détecteur d'intrusion à infrarouge suivant la revendication 1 ou 2, caractérisé par le fait que les réflecteurs secondaires (7—9) sont rassemblés pour former une seconde unité de construction (11).

4. Détecteur d'intrusion à infrarouge suivant la revendication 3, caractérisé par le fait que les récepteurs secondaires (7—9) sont disposés au moins approximativement dans un autre plan vertical.

5. Détecteur d'intrusion à infrarouge suivant l'une des revendications 2 à 4, caractérisé par le fait que le capteur (3) est intégré dans la première unité de construction (10).

6. Détecteur d'intrusion à infrarouge suivant l'une des revendications 1 à 5, caractérisé par le fait que pour chaque groupe de zones de réception, l'un des deux réflecteurs associés, à savoir le réflecteur primaire ou le réflecteur secondaire, est réalisé sous la forme d'une seule surface continue tandis que l'autre est constitué par une série de segments.

7. Détecteur d'instrusion à infrarouge suivant l'une des revendications 1 à 6, caractérisé par le fait que pour un groupe (R3) de zones de réception du rayonnement présentant une inclinaison supérieure ($\beta$3) par rapport au plan horizontal (H), les réflecteurs primaires ($6^1$—$6^3$) sont agencés sous la forme de surfaces planes et le récepteur secondaire associé est agencé sous la forme d'une seule surface continue et cintrée.

8. Détecteur d'intrusion à infrarouge suivant l'une des revendications 1 à 7, caractérisé par le fait que les réflecteurs primaires (4, 5) des groupes (R1, R2) de zones de réception possédant une inclinaison plus faible ($\beta$1, $\beta$2) par rapport au plan horizontal (H) sont disposés au-dessous du capteur (3) et les réflecteurs secondaires associés (7, 8) sont disposés à distance du capteur, et que les réflecteurs primaires (6) du groupe (R3) de zones de réception possédant une inclinaison supérieure ($\beta$3) par rapport au plan horizontal (H) sont disposés au-dessus du capteur (3) et le réflecteur secondaire associé (9) est disposé à distance du capteur.

9. Détecteur d'intrusion à infrarouge suivant l'une des revendications 1 à 8, caractérisé par le fait que la distance focale du réflecteur primaire ou secondaire, qui est associé à un groupe (R1—R3) de zones de réception de rayonnement, diminue lorsque l'angle d'inclinaison ($\beta$1—$\beta$3) du groupe associé (R1—R3) de zones de réception par rapport au plan horizontal (H) augmente.

10. Détecteur d'intrusion à infrarouge suivant l'une des revendications 1 à 9, caractérisé par le fait qu'au moins pour une partie des réflecteurs primaires ($4^1$—$4^9$, $5^1$—$5^8$, $6^1$—$6^3$), la surface réfléchissante, la hauteur et/ou la largeur à partir du centre ou du plan de symétrie (S) du détecteur (3) augmente vers les côtés.

11. Détecteur d'intrusion à infrarouge suivant l'une des revendications 1 à 10, caractérisé par le fait qu'au moins pour une partie des réflecteurs secondaires (7—9), la hauteur de la surface réfléchissante par rapport au centre ou au plan de symétrie (S) du détecteur (3) augmente vers les côtés.

**Claims**

1. Infrared intrusion detector having an infrared sensor (3) and a multitude of reflectors (4—9) for focusing infrared radiation from at least three radiation detection areas (R1—R3) on the infrared sensor (3), the radiation from several detection areas being focused on the sensor (3) via a number of primary reflectors ($4^1$—$4^9$, $5^1$—$5^8$, $6^1$—$6^3$) corresponding to the number of the detection areas and forming a horizontal row and a common secondary reflector (7—9) in a folded path of rays, characterized in that several rows (4—6) of primary reflectors and several associated secondary reflectors (7—9) are provided which form a corresponding number of groups of radiation detection areas (R1—R3) having an inclination ($\beta$1—$\beta$3) in relation to the horizontal plane (H) which varies according to the group, in each case one of the two primary or secondary reflectors (4—9) assigned to each detection area (R1—R3) being arranged at least approximately in a vertical plane and the other reflectors (4—9) being arranged at a certain distance from them, in each case one of the reflectors (4—9) being of flat construction while the associated other reflector (4—9) has a curved surface.

2. Infrared intrusion detector according to Patent Claim 1, characterized in that the primary reflectors (4—6) are combined to form a first unit (10).

3. Infrared intrusion detector according to Patent Claim 1 or 2, characterized in that the secondary reflectors (7—9) are combined to form a second unit (11).

4. Infrared intrusion detector according to Patent Claim 3, characterized in that the secondary reflectors (7—9) are arranged at least approximately in a further vertical plane.

5. Infrared intrusion detector according to one of Patent Claims 2 to 4, characterized in that the sensor (3) is integrated in the first unit (10).

6. Infrared intrusion detector according to one of Patent Claims 1 to 5, characterized in that, for each detection area group, one of the two assigned reflectors, primary or secondary reflector, is constructed as one single continuous surface and the other consists of a row of reflector segments.

7. Infrared intrusion detector according to one of Patent Claims 1 to 6, characterized in that, for one group (R3) of radiation detection areas with a greater inclination (β3) in relation to the horizontal plane (H), the primary reflectors (61—63) are constructed as flat surfaces and the associated secondary reflector as one single continuous and curved surface.

8. Infrared intrusion detector according to one of Patent Claims 1 to 7, characterized in that the primary reflectors (4, 5) of the detection area groups (R1, R2) of lesser inclination (β1, β2) in relation to the horizontal planes (H) are arranged below the sensor (3) and the associated secondary reflectors (7, 8) are arranged at a distance from them, and in that the primary reflectors (6) of the detection area group (R3) of greater inclination (β3) in relation to the horizontal plane (H) are arranged above the sensor (3) and the associated secondary reflector (6) is arranged at a distance from them.

9. Infrared intrusion detector according to one of Patent Claims 1 to 8, characterized in that the focal length of the primary or secondary reflector associated with one radiation detection area group (R1—R3) having an increasing angle of inclination (β1—β3) of the associated detection area group (R1—R3) in relation to the horizontal plane (H) decreases.

10. Infrared intrusion detector according to one of Patent Claims 1 to 9, characterized in that, at least with some of the primary reflectors ($4^1$—$4^9$, $5^1$—$5^8$, $6^1$—$6^3$), the reflecting surface, height and/or width increases from the centre or the plane of symmetry (S) of the detector (3) towards the sides.

11. Infrared intrusion detector according to one of Patent Claims 1 to 10, characterized in that, at least with some of the secondary reflectors (7—9), the height of the reflecting surface increases from the centre or the plane or symmetry (S) of the detector (3) towards the sides.

FIG.1

FIG.2